(19) **Europäisches Patentamt European Patent Office Office européen des brevets**

(11) **EP 4 572 406 A1**

(12) **EUROPEAN PATENT APPLICATION**

(43) Date of publication:
18.06.2025 Bulletin 2025/25

(21) Application number: 24216559.5

(22) Date of filing: 29.11.2024

(51) International Patent Classification (IPC):
*H04W 48/02* (2009.01)   *H04W 48/12* (2009.01)
*H04W 52/02* (2009.01)   *H04W 4/70* (2018.01)

(52) Cooperative Patent Classification (CPC):
**H04W 48/02; H04W 52/0206;** H04W 4/70;
H04W 48/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.12.2023 GB 202319262**

(71) Applicant: **Nokia Technologies Oy
02610 Espoo (FI)**

(72) Inventors:
• **TAYYAB, Muhammad
  90630 Oulu (FI)**
• **KUMAR, Dileep
  02230 Espoo (FI)**

(74) Representative: **Nokia EPO representatives
Nokia Technologies Oy
Karakaari 7
02610 Espoo (FI)**

(54) **ACCESS CONTROL FOR NETWORK ENERGY SAVING**

(57)     Examples of the disclosure relate to access control for network energy saving. An apparatus determines to perform a connection request and perform an evaluation whether to initiate an access procedure with a network node. The evaluation comprises using at least one network energy saving mode parameter in an evaluation criterion. The apparatus initiates the access procedure with a network node based on whether the evaluation criterion is satisfied.

FIG.4

EP 4 572 406 A1

**Description**

TECHNOLOGICAL FIELD

Examples of the disclosure relate to access control. Some relate to access control for network energy saving.

BACKGROUND

Network energy saving (NES) can be used by communications networks to improve environmental sustainability, to reduce environmental impact, and for operational cost savings.

BRIEF SUMMARY

According to various, but not necessarily all, examples of the disclosure there is provided an apparatus comprising: at least one processor;
and at least one memory storing instructions that, when executed by the at least one processor, cause the apparatus at least to perform:

determining to perform a connection request;
performing an evaluation whether to initiate an access procedure with a network node wherein the evaluation comprises using at least one network energy saving mode parameter in an evaluation criterion; and
initiating the access procedure with a network node based on whether the evaluation criterion is satisfied.

The evaluation may comprise determining at least a first value using the at least one network energy saving mode parameter and comparing the determined value to a random number.
If the evaluation criterion is not satisfied the apparatus may be caused to perform starting a barring timer wherein the duration of the barring timer is determined by at least one of a network energy saving mode parameter and an evaluation criterion.
The apparatus may be barred from performing an access procedure with the network node for the duration of the timer.
The at least one network energy saving mode parameter and the evaluation criterion may be received from the network node.
The at least one network energy saving mode parameter may comprise at least one of:

a network energy saving barring factor;
a network energy saving barring time; or
an indication of an energy saving mode of the network node.

The apparatus as claimed in any preceding claim may be caused to perform:

receiving an update for the at least one network energy saving mode parameter from the network node;
updating or replacing the at least one network energy saving mode parameter based on the update; and
performing the evaluation whether to initiate an access procedure with a network node wherein the evaluation comprises using at least one network energy saving mode parameter in an evaluation criterion.

The at least one evaluation criterion may comprise a mathematical operation based on the at least one network energy saving mode parameter.
The at least one network energy saving mode parameter may comprise different parameters for different energy saving modes of the network node.
The different network energy saving modes may comprise at least a first mode and a second mode, wherein a number of active resources at the network node is higher in the first mode than in the second mode.
The at least one network energy saving mode parameter may be associated with a specific type of the apparatus.
The at least one network energy saving mode parameter may be received as additional information to unified access control parameters.
The at least one network energy saving mode parameter may comprise information specific to at least one of:

an access category;
an access identity.

The at least one network energy saving mode parameter of the network node may be received via at least one of:

- a broadcast message;
- unified access control information;
- a master information block; or
- a system information block.

The evaluation criterion may be received via at least one of:

- a broadcast message;
- unified access control information;
- a master information block; or
- a system information block.

The apparatus may comprise or be comprised in one of:

- a user equipment;
- an energy harvesting device;
- a reduced capability device;
- an internet of things device; or
- an ambient internet of things device.

According to various, but not necessarily all, examples of the disclosure there is provided a method comprising:

determining to perform a connection request;
performing an evaluation whether to initiate an access procedure with a network node wherein the evaluation comprises using at least one network energy saving mode parameter in an evaluation criterion; and
initiating the access procedure with a network node based on whether the evaluation criterion is satisfied.

According to various, but not necessarily all, examples of the disclosure there is provided a computer program comprising instructions which, when executed by an apparatus, cause the apparatus to perform at least:

determining to perform a connection request;
performing an evaluation whether to initiate an access procedure with a network node wherein the evaluation comprises using at least one network energy saving mode parameter in an evaluation criterion; and
initiating the access procedure with a network node based on whether the evaluation criterion is satisfied.

While the above examples of the disclosure and optional features are described separately, it is to be understood that their provision in all possible combinations and permutations is contained within the disclosure. It is to be understood that various examples of the disclosure can comprise any or all of the features described in respect of other examples of the disclosure, and vice versa. Also, it is to be appreciated that any one or more or all of the features, in any combination, may be implemented by/comprised in/performable by an apparatus, a method, and/or computer program instructions as desired, and as appropriate.

BRIEF DESCRIPTION

Some examples will now be described with reference to the accompanying drawings in which:

FIG. 1 shows an example network;
FIG. 2 shows an example method;
FIG. 3 shows an example method;
FIG. 4 shows an example signaling chart;
FIG. 5 shows an example network;
FIG. 6 shows an example of traffic change; and
FIG. 7 shows an example apparatus.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DEFINITIONS

| AC | Access Category |
| AI | Access Identity |
| AIoT | Ambient Internet of Things |
| gNB | NR base station |
| IoT | Internet of Things |
| MIB | Master Information Block |
| NES | Network Energy Saving |
| RedCap | Reduced Capability |
| RRC | Radio Resource Control |
| SIB | System Information Block |
| UAC | Unified Access Control |
| UE | User Equipment |
| UL | Uplink |

DETAILED DESCRIPTION

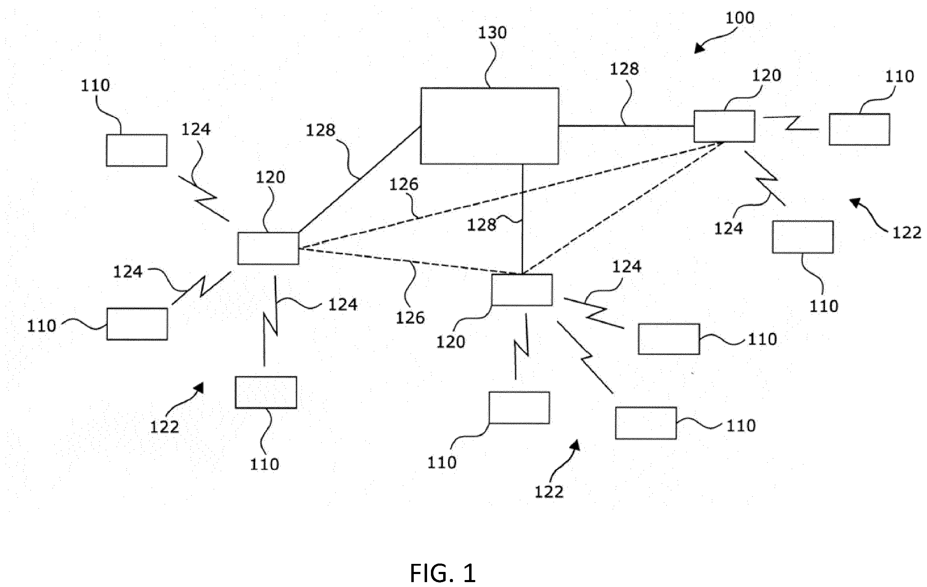

Fig. 1 illustrates an example of a communications network 100 such as a 5G network or a 6G network or any other suitable type of network. The network 100 comprises a plurality of different types of nodes 110, 120, 130. The different types of nodes 110, 120, 130 can comprise terminal nodes 110, and network nodes 120, 130. The network nodes can comprise access nodes 120 and core network nodes 130 and/or any other suitable type of apparatus.

The access nodes 120 can be configured to communicate with the terminal nodes 110. The core network nodes 130 communicate with the access nodes 120. In some examples the core network nodes 130 communicate with the terminal nodes 110.

The core network nodes 130 can, in some examples, communicate with each other. The one or more access nodes 120 can, in some examples, communicate with each other.

The network 100 can be a cellular network comprising a plurality of cells 122. Each of the cells is served by an access node 120. In this example, the interface between the terminal node 110 and an access node 120 providing a cell 122 is a wireless interface 124.

The access nodes 120 can comprise one or more cellular radio transceivers. The terminal nodes 110 can comprise one or more cellular radio transceivers.

The terminal nodes 110 can comprise user equipments (UE), energy harvesting devices, reduced capability (RedCap) devices, internet of things (IoT) devices, ambient internet of things (AIoT) devices, or any other suitable type of devices.

The access nodes 120 can be base stations. The access nodes 120 can be any suitable type of base station. The access node 120 can be a network entity responsible for radio transmission and reception in one or more cells to or from terminal nodes 110. The access node 120 can be a network element in a Radio Access Network (RAN), or any other suitable type of network.

The core network nodes 130 can be part of a core network. The core network nodes 130 can be configured to manage functions relating to connectivity for the terminal nodes 110. For example, the core network nodes 130 can be configured to manage functions such as connectivity, mobility, authentication, authorization and/or other suitable functions.

In the example of Fig. 1 the core network node 130 is shown as a single entity. In some examples the core network node 130 could be distributed across multiple entities. For example, the core network node 130 could be cloud based or distributed in any other suitable manner.

The network 100 can be any suitable type of network, for example it can be a New Radio (NR) network that uses gNB as access nodes. New Radio is the 3GPP name for 5G technology. In such cases the serving nodes 120 can comprise gNBs configured to provide user plane and control plane protocol terminations towards the terminal nodes 110 and/or to perform any other suitable functions. The gNBs are interconnected with each other by means of an X2/Xn interface 126. The gNBs are also connected by means of the N2 interface 128 to the core network nodes 130. Other types of networks and interfaces could be used in other examples. Other types of networks could comprise next-generation mobile and communication network, for example, a 6G network.

Unified Access Control (UAC) is a mechanism to determine whether a UE is allowed to access the network or specific services. UAC parameters can be broadcasted for all UEs on the cell and UEs may have up-to-date UAC information before the UE starts the access attempt. Network can restrict access of the UEs using UAC without a need for rejection. When the UE may need to access a 5G system, the UE first performs access control checks to determine if the access is allowed. Access attempt may relate to, for example, multimedia priority service (MPS), mission-critical service (MCS), or a disaster condition, etc. In UAC check, a UE maps its access attempt to an access category (AC) and one or more access identities (AIs) based on mapping rules, which may be pre-defined in standard specifications.

The UE may have received barring information, e.g. via SIB1 message. For each AC, barring information may comprise a barring factor, barring time, and barring indicator for each AIs. A barring indication for each AI informs whether an access attempt is allowed for this AI for this AC. The barring factor indicates the probability that a given access request can be allowed. The barring time defines the minimum time interval, e.g. UAC-BarringTime, before a new access attempt can be performed after it was barred. Then, the UE may perform an access barring check as defined in TS 24.501 and TS 38.331.

Network energy saving (NES) is important for networks such as the network 100 of Fig. 1. NES helps to improve environmental sustainability, reduce environmental impact, and provide operational cost savings. A significant proportion of the energy consumption comes from the radio access network and in particular from the active antenna unit (AAU). The power consumption of a radio access can be split into two parts: the dynamic part which is only consumed when data transmission/reception is ongoing, and the static part which is consumed all the time to maintain the necessary operation of the radio access devices, even when the data transmission/reception is not on-going.

A network node or access node 120 can have one or more NES modes. The different NES modes or energy saving modes can have different levels of energy usage. For example, a first NES mode could have a first amount of the antenna resources active while a second NES mode could have a second amount of the antenna resources active where the first and second amounts are different. An NES mode or energy saving mode may relate to adaptation of at least one of: antenna resource usage, bandwidth of active bandwidth part (BWP), transmission power, time (slots occupied for DL transmissions).

For example, antenna resource usage may be adapted via adaptation of spatial elements/antennas. This adaptation aims to dynamically adapt the spatial elements using a scaling factor (e.g. $s\,a$) for the fraction of active antenna elements at the network node.

For example, transmission power of signals or channels may be adapted. This adaptation aims at adapting the transmission power or power spectral density (PSD) of downlink signals using a scaling factor (e.g. $sp$) for the ratio of PSD per transmission (Tx) between the DL transmission and reference configuration.

For example, bandwidth of active BWP may be adapted. This adaptation aims at adapting the bandwidth of active BWP using a scaling factor (e.g. $s\,f$) for the ratio between the RF bandwidth and the maximum system BW.

For example, adaptation in time domain aims at adapting the slots occupied with DL transmissions using a scaling factor (e.g. $s\,t$) for the active slots occupied with data.

Let us consider apparatuses or devices such as an energy harvesting device, a RedCap device, an IoT device, an AIoT device, which may be referred to as a low-priority device or low-priority user equipment, UE. When a UE, e.g. a low-priority UE, wakes up a network node, which is in NES mode, it is inefficient from a NES point of view.

Examples of the disclosure provide methods and apparatuses configured to perform the methods to prevent UEs, e.g. low-priority UEs, from accessing the cells that are adopting NES techniques. For example, there is provided an access control process that can account for different NES modes or energy saving modes of a network 100.

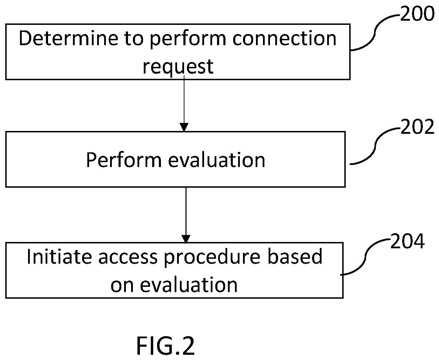

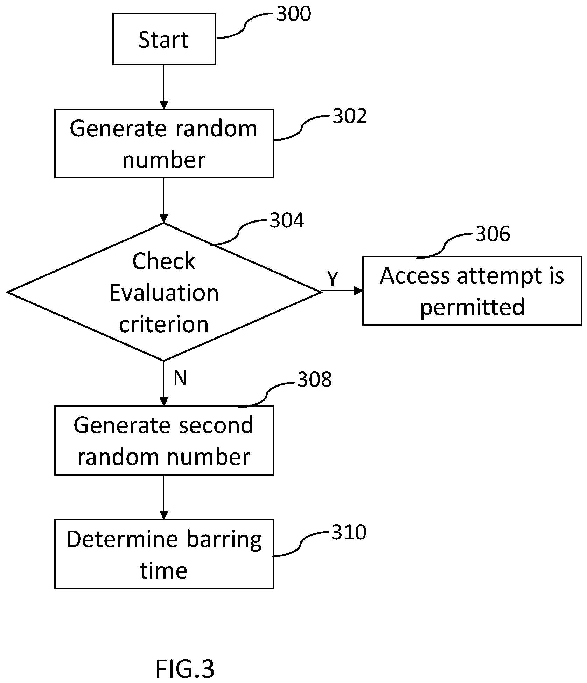

Fig. 2 shows an example method that may be implemented in examples of the disclosure. The method of Fig. 2 may be implemented by an apparatus comprising a terminal node 110, e.g. UE, or an apparatus within a terminal node 110. For example, the apparatus configured to perform at least the method may be one of: a UE, a low-priority UE, an energy harvesting device, a RedCap device, an IoT device, an AIoT device. The method of Fig. 3 is a method that could be implemented by a network node 120, e.g. gNB. The respective methods can be performed as part of an access procedure for a network 100 that can implement NES.

The method of Fig. 2 comprises, at block 200, determining to perform a connection request. The connection request can comprise a random access procedure, a Radio Resource Control (RRC) connection resume procedure, or any other suitable type of access procedure.

At block 202 the method comprises performing an evaluation whether to initiate an access procedure with a network node 120. The evaluation comprises using at least one NES mode parameter in an evaluation criterion.

The evaluation can comprise any suitable mathematical operations. The evaluation criterion can comprise a mathematical operation based on the at least one network energy saving mode parameter. Examples of mathematical operations are given below.

The evaluation can comprise determining at least a first value using the NES mode parameter and comparing the determined value to a random number. The first value can be determined using the NES mode parameter in combination with one or more other parameters. The other parameters could be UAC parameters or any other suitable parameters. In some examples the first value could be the value of the NES mode parameter or could be determined without using any additional parameters.

The at least one NES mode parameter and the evaluation criterion can be received from the network node 120. The NES mode parameter can be an indication of an NES mode of the network node 120. The NES mode parameters can comprise NES barring factor, an NES barring time, and/or any other suitable parameters.

The at least one NES mode parameter can comprise different parameters for different energy saving modes of the network node 120. The different energy saving modes of the network node 120 can comprise different amounts of resources of the network node 102 being active or any other different types of arrangements of the network node 120. For example, the different NES modes can comprise at least a first mode (e.g. mode 1) and a second mode (mode 2), wherein the number of active resources at the network node 120 is higher in the first mode than in the second mode. For example, in mode 1, 75 % of the resources of the network node are active; in mode 2, 50 % of the resources of the network node are active; in mode 3, 25 % of the resources of the network node are active.

The NES mode parameters can be associated with a specific type of apparatus. The different types of apparatus could be, or could be comprised within, a UE, an energy harvesting device, a RedCap device, an IoT device, an AIoT device or any other suitable type of device. The different NES mode parameters associated with the different types of apparatus can account for different levels of priority of the types of apparatus. For example, apparatuses or devices such as an energy harvesting device, a RedCap device, an IoT device, an AIoT device may be referred to as a low-priority device or low-priority UE.

In some examples the at least one NES mode parameter can comprise information specific to an access category (AC) and/or an access identity (AI). This can enable different NES mode parameters to be associated with different access categories and/or different access identities.

The at least one NES mode parameter can be received in any suitable format. In some examples the at least one NES mode parameter can be received as additional information to unified access control (UAC) parameters.

The at least one NES mode parameter can be received in any suitable signalling. In some examples the NES mode parameter can be received in a broadcast message, UAC information, a master information block (MIB) or a system information block (SIB).

The at least one evaluation criterion can be received in any suitable signalling. In some examples the NES mode parameter can be received in a broadcast message, UAC information, a master information block (MIB) or a system information block (SIB).

At block 204 the method comprises initiating the access procedure with a network node based on whether the evaluation criterion is satisfied. If the evaluation criteria is satisfied then the access procedure is initiated and if the evaluation criteria is not satisfied then the access procedure is not initiated.

If the evaluation criterion is not satisfied then the apparatus can be caused to perform starting a barring timer. The duration of the barring timer can be determined by an NES mode parameter and an evaluation criterion. Examples of calculation of the timer period are given below. The apparatus is barred from performing an access procedure with the network node 120 for the duration of the timer. The apparatus will wait until the determined time period expires before the apparatus makes a next attempt to access a cell provided by the network node 120.

In some examples the apparatus can receive an update for the NES mode parameter from the network node 120. The NES mode parameter could be updated by the network node 120 due to changes in the network load. The changes in the network load could be a current network load or an upcoming network load. The updates to the NES mode parameter could be received using any suitable signaling. The apparatus could then update or replace the at least one NES mode parameter based on the received update. The apparatus can then use the update or replaced NES mode parameter in an evaluation criterion.

In some examples the NES mode parameter that is received from the network node can comprise an indication of the NES mode. For example, the parameter could indicate if the network node is using mode 1, in which e.g. 75 % of the resources of the network node are active; mode 2, in which e.g. 50 % of the resources of the network node are active; or mode 3, in which e.g. 25 % of the resources of the network node are active. Other modes with different percentages can be used in other examples. In such cases the apparatus can be caused to perform determining at least one of an NES barring factor or an NES barring time, based at least in part on the indicated network energy saving mode.

The determination of the NES barring factor or the NES barring time by the apparatus can also be based on other criteria. The other criteria can comprise criteria specific to the apparatus. This can provide improved flexibility for the apparatus. For example, the NES barring factor or the NES barring time, can be determined based, at least in part, on a buffer status of the apparatus. In such cases the apparatus can determine if the buffer of the apparatus is full, or above a threshold level. If the buffer is full or above a threshold level then apparatus could use an NES barring factor and/or NES barring time such that the apparatus is allowed to transmit to avoid any data loss. If the buffer is not full or is below a threshold level then apparatus could use an NES barring factor and/or NES barring time such that the apparatus restricts the access until more resources are available at the network node. The apparatus may also take into account its quality of service (QoS) requirements. For example, if QoS requirements are not too strict and the buffer is empty or not full or is below a threshold level, the apparatus could use an NES barring factor and/or NES barring time such that the apparatus restricts the access until more or all resources are available at the network node.

Fig. 3 shows shows another example method that may be implemented in examples of the disclosure. The method of Fig. 3 may be implemented by an apparatus comprising a terminal node 110, e.g. UE, or an apparatus within a terminal node 110. For example, the apparatus configured to perform at least the method may be a UE. The method of Fig. 3 is a method that could be implemented by a network node 120, e.g. gNB. The respective methods can be performed as part of an access procedure for a network 100 that can implement NES.

The method starts at block 300.

At block 302 the method comprises generating a first random number. The first random number can take any value between 0 and 1. Any suitable means can be used to generate the random number.

At block 304 the method comprises checking evaluation criterion. The evaluation criterion can be received from the network. The evaluation criterion can comprise one or more mathematical operations.

In the example of Fig. 3 the evaluation criterion comprises comparing a value based on one or more NES mode parameters to the random number generated at block 302. The NES mode parameters can be received from the network node 120. The value based on the one or more NES mode parameters could be the product of a UAC barring factor and NES barring factor or any other suitable value. Examples of mathematical operations that can be used are given below.

If the determined value is equal to or greater than the generated random number then the evaluation criterion are determined to be satisfied. If the determined value is less than the generated random number then the evaluation criterion are determined not to be satisfied.

If the evaluation criterion is satisfied then at block 306 an access attempt is permitted. The access attempt can comprise a random access procedure, a Radio Resource Control (RRC) connection resume procedure, or any other suitable type of access procedure.

If the evaluation criterion is not satisfied then the access attempt is not permitted. The method proceeds to block 308. At block 308 the apparatus generates a second random number. The second random number can take any value between 0 and 1. The second random number can be generated using any suitable procedure.

At block 310 the second random number is used to determine a barring time period. The barring time period defines the time period for which the apparatus is considered to be barred. The apparatus does not make any more access attempts until the barring time period has expired.

The barring time period can be determined using any suitable mathematical operation. The mathematical operation that is to be used can be received from the network node 120. The mathematical operation that is to be used can be dependent upon the NES mode of the network and/or any other relevant factors. The mathematical operation that is used to determine the barring time period can use an NES barring time parameter that us received from the network, and/or any other suitable parameters. Examples of mathematical operations that can be used to determine the barring time are given below.

The apparatus will wait until the determined barring time period expires before the apparatus makes a next attempt to access a cell provided by the network node 120.

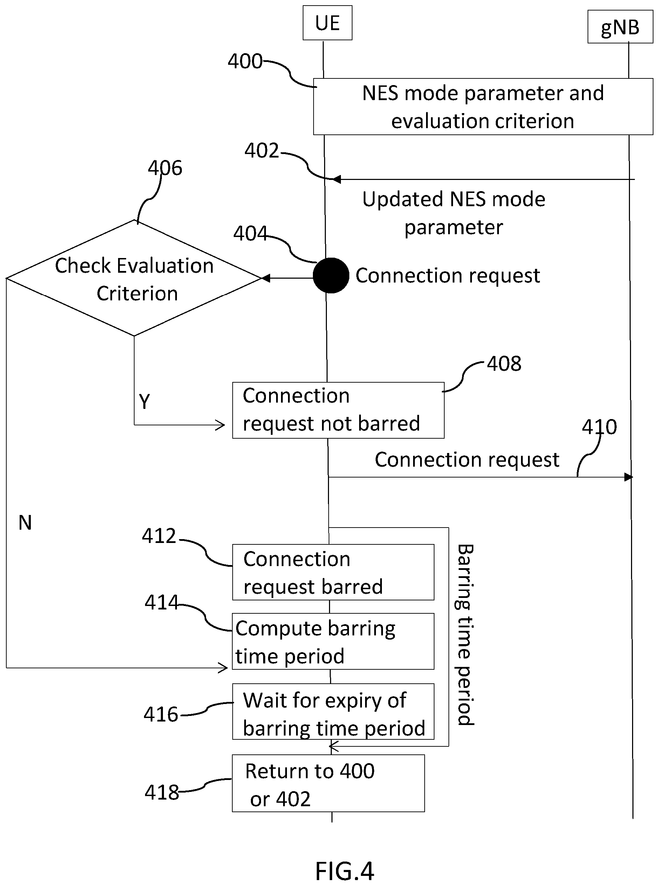

Fig. 4 shows an example signaling chart that could be used in examples of the disclosure. In this example the signaling is between a UE and a gNB. Other types of terminal node 110 and network node 120 could be used in other examples. For example, the UE may be a low-priority UE as described earlier.

The example method shown in Fig. 4 could be used to adapt a UAC procedure. The example method can be used to restrict network access through the use of one or more NES mode parameters and corresponding evaluation criterion.

At block 400 the method comprises transmitting one or more NES mode parameters and one or more evaluation criterion from the gNB to the UE. The NES mode parameters and one or more evaluation criterion can be transmitted in a broadcast message, UAC information, a master information block (MIB) or a system information block (SIB), or in any other suitable signalling.

In examples where the NES mode parameters and one or more evaluation criterion are transmitted with UAC information the signaling at block 400 can also comprise a barring factor, barring time and barring indicator for each Access Identity (AI). The NES mode parameters and evaluation criterion can be provided as additional information to the barring factor, barring time and barring indicator.

The NES mode parameters can comprise an NES barring factor, an NES barring time, and/or any other suitable parameters or combinations of parameters.

The NES mode parameters can be different for different NES modes of the gNB. The NES modes parameters can be set so as to implement different limits on network traffic for different NES modes. For example, a first NES mode could comprise the gNB using a sleep mode having a first duration and a second NES mode could comprise the gNB using a sleep mode having a second duration where the second duration is longer than the first duration. In this example the NES parameter, e.g. NES barring factor, could be set lower for the second NES mode so as to reduce access requests for the gNB. For example, configuring a value of '0' for NES barring factor, all access control checks will lead to barred access attempts.

In some examples a first NES mode could comprise a first amount of resources being active and a second NES mode could comprise a second amount of resources being active where the second amount is less than the first amount. In such examples the NES parameter, e.g. NES barring factor, could be set lower for the second NES mode so as to reduce access requests for the gNB. For example, configuring a value of '0' for NES barring factor, all access control checks will lead to barred access attempts.

In some examples, NES barring time parameter may be different for different NES modes. For example, a higher NES barring time may be set so as to increase UE waiting time and thereby reduce access requests for the gNB.

In some examples the NES mode parameters can apply to all UEs. This could be the case in examples where there are very limited active or available resources at the gNB.

In some examples different NES mode parameters can be associated with different types of UEs. For instance, some UEs can be classed as low priority UEs and could have higher levels of restrictions compared to other UEs that are not low priority UEs. The NES mode parameters could apply for the low priority UEs but not for other types of UEs. There could be multiple levels or priority for the UEs and multiple NES mode parameters for the respective priority levels. The priority level of the UEs can be determined based on the active resources at the gNB and/or any other suitable factors.

At block 402 the gNB can send an updated NES mode parameter. The NES mode parameter can be updated based on changes in a network load. The NES mode parameter can be updated to restrict network traffic to a limit. The change can be for a current network load or an upcoming network load. The changes in the NES mode parameter can indicate a change in NES mode being used by the gNB. The network can adjust the NES mode parameters to stop UE access and to keep network traffic below a limit.

If the gNB does not determine that an updated NES mode parameter is needed then block 402 can be omitted and the UE can perform the method using the NES mode parameters received at block 400.

The updated NES parameter can be transmitted in any suitable signaling. The updated NES parameter can be transmitted with other information that enables a UE to determine whether or not it is permitted to access a cell. In some examples the updated NES parameter can be transmitted using SIB1.

At block 404 the UE determines to perform the connection request. The connection request can enable the UE to transition from an IDLE/INACTIVE mode to a CONNECTED mode.

Once the UE has determined to perform the connection request then, at block 406, the UE checks the evaluation criterion to determine whether to initiate an access procedure, e.g. a random access procedure. The UE can map its access attempt to an AC or one or more AIs . The UE can use the NES mode parameters received at block 400 or 402 in the evaluation criterion. In some examples one or more additional parameters can also be used in the evaluation criterion. For example, one or more UAC parameters could also be used.

The evaluation criterion can comprise any suitable mathematical operation. As an example, the evaluation criterion could comprise the UE generating a uniformly distributed random number rnd between 0 and 1, and evaluating equation 1.

$$rnd \leq uac\_BarringFactor \times NESBarringFactor, \; Eq. \; (1)$$

If the random number is less than the value of, the product of uac_BarringFactor and NESBarringFactor, then the access attempt is permitted. Otherwise, the access attempt is barred. In this example, configuring a value of '0' for uac_BarringFactor or NESBarringFactor means that all checks of the evaluation criterion will lead to barred access attempts.

Other equations or mathematical operations can be used in the evaluation criterion depending on network implementations and NES requirements. In some examples, as shown in equations 2 and 3, the evaluation criterion can be based on an NES barring factor in combination with a uac_BarringFactor.

$$rnd \leq (uac\_BarringFactor + NESBarringFactor)/2, \; Eq. \; (2)$$

$$rnd \leq abs(NESBarringFactor - uac\_BarringFactor), \; Eq. \; (3)$$

In some examples, as shown in equation 4 the evaluation criterion can be based on an NES barring factor alone without any other factors or parameters being used.

$$rnd \leq NESBarringFactor, \; Eq. \; (4)$$

Other evaluation criterion could also be used in examples of the disclosure.

In some examples the UE could choose the evaluation criterion to use based on the NES mode or energy saving mode. For instance, in a first NES mode the evaluation criterion could comprise equation 1 and in a second NEs mode the evaluation criterion could comprise equation 2, or any other suitable mathematical operations.

If the evaluation criterion is satisfied then the method proceeds to block 408. The connection request is not barred and the UE can determine to initiate an access procedure with the gNB. The UE can send a connection request to the gNB at block 410. For example, the UE can initiate a random access procedure with the gNB.

If the evaluation criterion is not satisfied then the method proceeds to block 412. The connection request is barred and the UE determines not to initiate an access procedure with the gNB. The UE refrains from initiating an access procedure with the gNB. The UE does not send a connection request to the gNB at that point. Instead, at block 414 a barring time period is computed. The barring time period can define the duration that the UE treats the cell of the gNB as barred for the corresponding access category. The barring time period can be determined by any suitable timer such as T390.

The barring time period can be computed using a suitable mathematical operation from the evaluation criterion and any suitable NES mode parameters such as an NES barring time. The mathematical operation can also use any other suitable parameters such as a uac_BarringTime. Equation 5 gives an example of a mathematical operation that can be used to determine the barring time period.

$$T390 \ = \ (0.7 \ + \ 0.6 \ * \ \text{rand}) \times \text{uac\_BarringTime} \times \text{NESBarringTime}, \ \text{Eq. (5)}$$

Other equations or mathematical operations can be used to compute the barring time period depending on network implementations and NES requirements. In some examples, as shown in equation 6 the evaluation criterion can be based on an NES barring factor in combination with a uac_BarringTime.

$$T390 \ = \ [(0.7 \ + \ 0.6 \ * \ \text{rand}) \times \text{uac\_BarringTime}] + \text{NESBarringTime}, \ \text{Eq. (6)}$$

In some examples, as shown in equation 7 the computation of the barring time period can be based on an NES barring factor alone without any other factors or parameters being used.

$$T390 \ = \ (0.7 \ + \ 0.6 \ * \ \text{rand}) \times \text{NESBarringTime}, \ \text{Eq. (7)}$$

For example, configuring a value of NES barring time close to '0' means that the UE is allowed to transmit a new connection request without waiting. Thus, a higher NES barring time may lead to larger waiting time for the UE. For example, a higher NES barring time may be set so as to increase UE waiting time and thereby reduce access requests for the gNB.

At block 416 the UE waits for the expiry of the barring time period. After the barring time period has expired the process can return to block 400 or 402. The UE can make a next attempt to access a cell provided by the gNB after the barring time period has expired. In some examples, the UE may try to access another network node, if UE is in a coverage of a cell provided by the other network node.

If the barring time period is close to 0 then the UE can transmit the connection request after the barring time period has expired. If the barring time period is greater than 1 the UE can transmit the connection request after the gNB has deactivated the current NES mode.

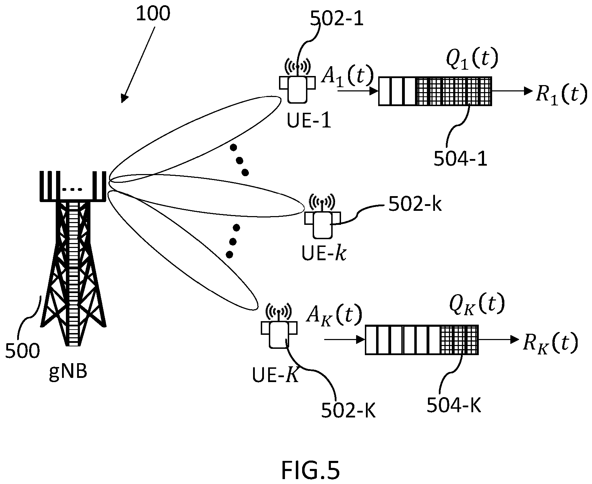

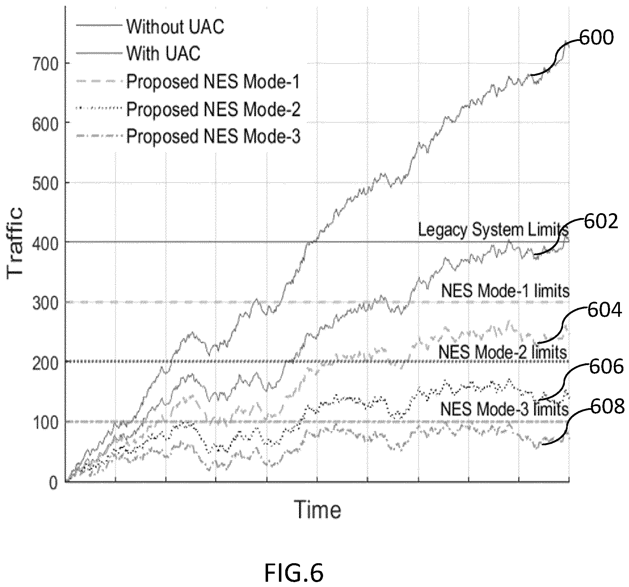

Figs. 5 and 6 show an example model network and results obtained using the model to indicate the power savings that can be obtained using examples of the disclosure. The equations used in this model to obtain the results shown in Fig. 6 are just one example and other equations and models could be used for other types of network node.

In these examples the energy consumed by a receiver can be modeled as the energy consumed by the components that maintain the necessary operation plus the energy consumed by the decoding stages corresponds to Rx activities. The gNB power consumption in active Uplink (UL) state $P^{UL}$ can be expressed as shown in equation 8.

$$P^{UL} = s_a \cdot P^{UL}_{dyn,ante} + P^{UL}_{static} , \ \text{Eq. (8)}$$

where $s_a$ is the fraction of active transceiver units which can be expressed as shown in equation 9.

$$P^{UL}_{dyn,ante} = P_{ActiveUL} - P_{microsleep}, \ \text{Eq. (9)}$$

where, $P_{ActiveUL}$ is the power consumption of the active transceiver units, $P_{microsleep}$ is the power conserved by microsleeps of the active transceiver units, and $\Delta$ is the additional e.g., decoding power consumption.

The decoding power consumption can be assumed to increase with the data rate. The data rate can be correlated with the coding rate $R$. A linear function model can be used to describe the relationship between the data rate and the power consumed by the decoder can be expressed using equation 10.

$$\Delta = \sum_{k=1}^{K} v_k R_k, \text{ Eq. (10)}$$

where $v_k$ is specific to a decoder and models the decoder efficiency.

The expected uplink sum rate $R = \sum_{k=1}^{K} R_k$ and NES gain can be defined using equation 11,

$$NES \% = \frac{P^{max} - P^{UL}}{P^{max}} \cdot 100 \text{ Eq. (11)}$$

where $P^{max}$ is active UL state power consumption with maximum load and active UEs.

In can be assumed that the UE has (finite) queue buffers to store the network layer data. $Q_k(t)$ can denote the queue backlog of /c-th UE during time slot $t$, which evolves according to equation 12

$$Q_k(t+1) = [Q_k(t) - R_k(t) + A_k(t)]^+, \ \forall k, \text{ Eq. (12)}$$

where $[x]^+ = max(x, 0)$, $R_k(t)$ is the achievable rate, and $A_k(t)$ denotes the data arrival with a mean arrival rate of $\mathbb{E}[A_k(t)] = \lambda_k$ , $\forall k$.

Fig. 5 schematically shows a network 100 comprising a gNB 500 transmitting data to multiple UEs 502. In the example of Fig. 5 three UEs 502-1, 502-k, 502-K are shown but any number of UEs could be used. Fig. 5 also shows, by way of examples, the queue backlogs 504-1, 504-K for the respective UEs.

In the model it is assumed that an access barring check involves the UE 502 generating a uniformly distributed random number rnd $\in$ [0,1], and evaluating the network configured values using equation q,

$$\text{rnd} \le \text{ uac\_BarringFactor} \times \text{NESBarringFactor, Eq (1)}$$

If the random number is less than the value, then the access attempt is permitted. Otherwise, the access attempt is barred for the current time. A barring access timer such as timer T390 is not considered for this model.

Table 1 gives an indication of the parameter assumptions that were made for the simulations that were used to obtain the results shown in Fig. 6. This example shows three different NES modes, a first NES mode-1 where the network has 75% of resources available so that the system limit is reduced by 25%, a second NES mode-2 where the network has 50% of resources available so that the system limit is reduced by 50%, and a third NES mode-3 where the network has 25% of resources available so that the system limit is reduced by 75%,

*Table 1*

| Parameter | Assumption | Descriptions |
|---|---|---|
| $s_a$ | 1 | fraction of active transceiver units |
| $P_{ActiveUL}$ | 6.5 | for BS category 2 Set 1 [3GPP TR 38.864] |
| $P_{microsleep}$ | 5.5 | for BS category 2 Set 1 [3GPP TR 38.864] |
| $v_k$ | rand[0.1, 0.4], $\forall k$ | decoder efficiency |
| data arrival | Pois($\lambda$) | Poisson distribution, with parameter $\lambda > 0.8$ |
| With UAC | 0.9 | uac - BarringFactor |
| NES Mode-1 | -0.85 | uac - BarringFactor(0.9) $\times$ NESBarringFactor(0.94) |
| NES Mode-2 | -0.8 | uac - BarringFactor(0.9) $\times$ NESBarringFactor(0.88) |
| NES Mode-3 | 0.75 | uac - BarringFactor(0.9) $\times$ NESBarringFactor(0.83) |

Fig. 6 shows a plot of the change in network traffic over time using the example system and parameters of Fig. 5 and table 1. Plot 600 shows the traffic change without using UAC ("Without UAC"), plot 602 shows the traffic change using UAC ("With UAC"), plot 604 shows the traffic change using NES mode-1 ("Proposed NES Mode-1"), plot 606 shows the traffic change using NES mode-2 ("Proposed NES Mode-2") and plot 608 shows the traffic change using NES mode-3 ("Proposed NES Mode-3").

Table 2 gives an indication of the power consumption and the normalized network energy savings for the respective modes.

*Table 2*

| UAC Scheme | Power consumption | Normalized Network Energy Saving [%] |
|---|---|---|
| Without UAC | 83.7525 | 0 |
| With UAC | 50.7015 | 39.4627 |
| With UAC + NES Mode-1 | 39.9487 | 52.3015 |
| With UAC + NES Mode-2 | 28.7128 | 65.7171 |
| With UAC + NES Mode-3 | 22.8561 | 72.7099 |

In examples of the disclosure when the network 100 identifies that traffic is exceeding the system limit, the network can use NES mode parameters and evaluation criterion to apply restrictions to UEs so as to keep the traffic under the system limit. The use of the NES mode parameters and evaluation criterion can improve the network energy savings and can enable the network nodes 120 to have longer sleep durations and/or fewer active resources at the gNB. For example, the NES Mode-3 shown in table 1 provides an NES of up to 72% compared to the baseline scenario.

The above results are one possible example case, and these may scale differently for different system configurations, and NES requirements. However, the underlying relationship between the parameters of power consumption, achievable rate, and network energy savings, will still hold.

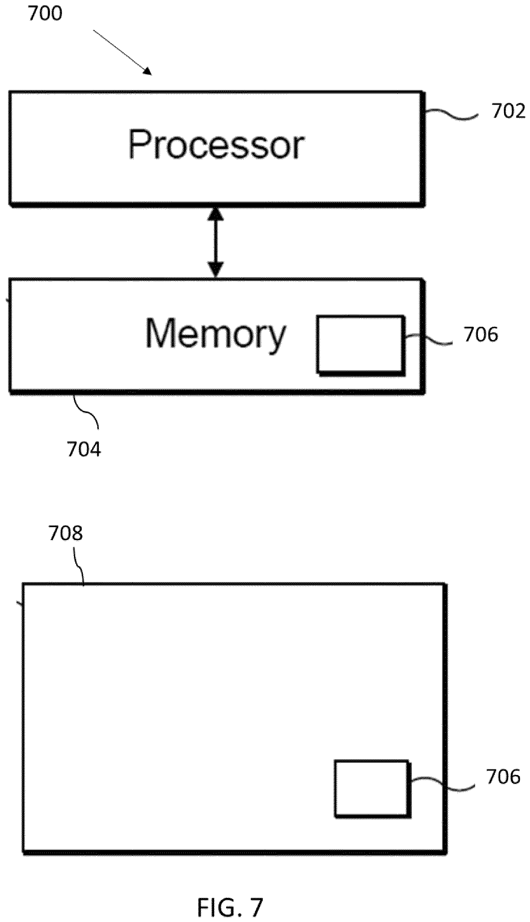

Fig. 7 illustrates an example apparatus 700. The apparatus 700 could be provided within an entity such as UE or any other suitable entity. Implementation of the apparatus 700 may be as controller circuitry. The apparatus 700 may be implemented in hardware alone, have certain aspects in software including firmware alone or can be a combination of hardware and software (including firmware).

As illustrated in Fig. 7 the apparatus 700 can be implemented using instructions that enable hardware functionality, for example, by using executable instructions of a computer program 706 in a general-purpose or special-purpose processor 702 that may be stored on a computer readable storage medium (disk, memory etc.) to be executed by such a processor 702.

The processor 702 is configured to read from and write to the memory 704. The processor 702 may also comprise an output interface via which data and/or commands are output by the processor 702 and an input interface via which data and/or commands are input to the processor 702.

The memory 704 stores a computer program 706 comprising computer program instructions (computer program code) that controls the operation of the apparatus when loaded into the processor 702. The computer program instructions, of the computer program 706, provide the logic and routines that enables the apparatus to perform the methods illustrated in the Figs. The processor 702 by reading the memory 704 is able to load and execute the computer program 706.

The apparatus 700 therefore comprises means for:

determining 200 to perform a connection request;
performing 202 an evaluation whether to initiate an access procedure with a network node wherein the evaluation comprises using at least one network energy saving mode parameter in an evaluation criterion; and
initiating 204 the access procedure with a network node based on whether the evaluation criterion is satisfied.

The computer program 706 may arrive at the apparatus via any suitable delivery mechanism 708. The delivery mechanism 708 may be, for example, a machine-readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 706. The delivery mechanism may be a signal configured to reliably transfer the computer program 706. The apparatus may propagate or transmit the computer program 706 as a computer data signal.

The computer program 706 can comprise computer program instructions for causing an apparatus to perform at least the following or for performing at least the following:

determining 200 to perform a connection request;
performing 202 an evaluation whether to initiate an access procedure with a network node wherein the evaluation comprises using at least one network energy saving mode parameter in an evaluation criterion; and

initiating 204 the access procedure with a network node based on whether the evaluation criterion is satisfied.

The computer program instructions may be comprised in a computer program, a non-transitory computer readable medium, a computer program product, a machine-readable medium. In some but not necessarily all examples, the computer program instructions may be distributed over more than one computer program.

Although the memory 704 is illustrated as a single component/circuitry it may be implemented as one or more separate components/circuitry some or all of which may be integrated/removable and/or may provide permanent/semi-permanent/ dynamic/cached storage.

Although the processor 702 is illustrated as a single component/circuitry it may be implemented as one or more separate components/circuitry some or all of which may be integrated/removable. The processor 702 may be a single core or multi-core processor.

An example of a SIB1 that can be used in examples of the disclosure is given below. The SIB1 may comprise at least one NES mode parameter of the network node. For example, the SIB1 may comprise NES barring factor (uac-NESBarringFactor). For example, the SIB1 may comprise NES barring time (uac-NESBarringTime). For example, the SIB1 may comprise the NES barring factor and the NES barring time.

The SIB1 may enable the network node to indicate NES mode parameters for respective NES modes (cellBarredNES-Mode1 / cellBarredNES-Mode2 / cellBarredNES-Mode3). The apparatus can save the NES mode parameters, or updated NES mode parameters for each type of mode. Once the apparatus has stored the NES mode parameters for the respective NES modes the network can just send the NES mode and the apparatus can select the appropriate parameters based on the stored information.

```
-- ASN1START

-- TAG-SIB1-START


SIB1 ::=      SEQUENCE {

    cellSelectionInfo           SEQUENCE {

        q-RxLevMin                  Q-RxLevMin,

        q-RxLevMinOffset            INTEGER (1..8)              OPTIONAL,
    -- Need S

        q-RxLevMinSUL               Q-RxLevMin                 OPTIONAL,
    -- Need R

        q-QualMin                   Q-QualMin                  OPTIONAL,
    -- Need S

        q-QualMinOffset             INTEGER (1..8)             OPTIONAL
    -- Need S

    }                                                          OPTIONAL,   -- Cond
Standalone

    cellAccessRelatedInfo       CellAccessRelatedInfo,

    connEstFailureControl                                      ConnEstFailureControl
OPTIONAL,   -- Need R
```

```
        si-SchedulingInfo          SI-SchedulingInfo                          OPTIONAL,
-- Need R
        servingCellConfigCommon                          ServingCellConfigCommonSIB
OPTIONAL,  -- Need R
        ims-EmergencySupport                                    ENUMERATED  {true}
OPTIONAL,  -- Need R
        eCallOverIMS-Support                                    ENUMERATED  {true}
OPTIONAL,  -- Need R
        ue-TimersAndConstants                                   UE-TimersAndConstants
OPTIONAL,  -- Need R
        uac-BarringInfo            SEQUENCE {
            uac-NESBarringFactor UAC-BarringParameterForNES OPTIONAL,  -- Need S
            uac-NESBarringTime    UAC-BarringParameterForNES OPTIONAL,  -- Need S
            uac-BarringForCommon                               UAC-BarringPerCatList
OPTIONAL,  -- Need S
            uac-BarringPerPLMN-List                       UAC-BarringPerPLMN-List
OPTIONAL,  -- Need S
            uac-BarringInfoSetList      UAC-BarringInfoSetList,
            uac-AccessCategory1-SelectionAssistanceInfo CHOICE {
                plmnCommon           UAC-AccessCategory1-SelectionAssistanceInfo,
                individualPLMNList        SEQUENCE (SIZE (2..maxPLMN)) OF UAC-
AccessCategory1-SelectionAssistanceInfo
                }                                             OPTIONAL  --
Need S
            }                                               OPTIONAL,  -- Need
R
        useFullResumeID                                        ENUMERATED  {true}
OPTIONAL,  -- Need R
        lateNonCriticalExtension                              OCTET    STRING
OPTIONAL,
        nonCriticalExtension       SIB1-v1610-IEs                       OPTIONAL
    }
```

```
SIB1-v1610-IEs ::=                SEQUENCE {
    idleModeMeasurementsEUTRA-r16                              ENUMERATED{true}
OPTIONAL,  -- Need R
    idleModeMeasurementsNR-r16                                ENUMERATED{true}
OPTIONAL,  -- Need R
    posSI-SchedulingInfo-r16                                  PosSI-SchedulingInfo-r16
OPTIONAL,  -- Need R
    nonCriticalExtension        SIB1-v1630-IEs                       OPTIONAL
}


SIB1-v1630-IEs ::=          SEQUENCE {
    uac-BarringInfo-v1630        SEQUENCE {
        uac-AC1-SelectAssistInfo-r16     SEQUENCE (SIZE (2..maxPLMN)) OF UAC-
AC1-SelectAssistInfo-r16
    }                                                         OPTIONAL,  -- Need
R
    nonCriticalExtension        SIB1-v1700-IEs                       OPTIONAL
}


SIB1-v1700-IEs ::=          SEQUENCE {
    hsdn-Cell-r17          ENUMERATED {true}                   OPTIONAL,
-- Need R
    uac-BarringInfo-v1700         SEQUENCE {
        uac-BarringInfoSetList-v1700        UAC-BarringInfoSetList-v1700
    }                                                         OPTIONAL,  -- Cond
MINT
    sdt-ConfigCommon-r17                     SDT-ConfigCommonSIB-r17
OPTIONAL,  -- Need R
    redCap-ConfigCommon-r17                  RedCap-ConfigCommonSIB-r17
OPTIONAL,  -- Need R
    featurePriorities-r17        SEQUENCE {
```

```
        redCapPriority-r17        FeaturePriority-r17                          OPTIONAL,
    -- Need R
        slicingPriority-r17       FeaturePriority-r17                          OPTIONAL,
    -- Need R
        msg3-Repetitions-Priority-r17                          FeaturePriority-r17
    OPTIONAL,  -- Need R
        sdt-Priority-r17          FeaturePriority-r17                          OPTIONAL
    -- Need R
        }                                              OPTIONAL,  -- Need
    R
        si-SchedulingInfo-v1700                        SI-SchedulingInfo-v1700
    OPTIONAL,  -- Need R
        hyperSFN-r17        BIT STRING (SIZE (10))                             OPTIONAL,
    -- Need R
        eDRX-AllowedIdle-r17                           ENUMERATED      {true}
    OPTIONAL,  -- Need R
        eDRX-AllowedInactive-r17                       ENUMERATED      {true}
    OPTIONAL,  -- Cond EDRX-RC
        intraFreqReselectionRedCap-r17    ENUMERATED   {allowed,     notAllowed}
    OPTIONAL,  -- Need S
        cellBarredNTN-r17                         ENUMERATED  {barred,  notBarred}
    OPTIONAL,  -- Need S
        nonCriticalExtension      SIB1-v1740-IEs                               OPTIONAL
    }


SIB1-v1740-IEs ::=          SEQUENCE {
        si-SchedulingInfo-v1740                        SI-SchedulingInfo-v1740
    OPTIONAL,  -- Need R
        nonCriticalExtension      SEQUENCE {}                                  OPTIONAL
    }


UAC-AccessCategory1-SelectionAssistanceInfo ::=   ENUMERATED {a, b, c}
```

```
UAC-AC1-SelectAssistInfo-r16 ::=    ENUMERATED {a, b, c, notConfigured}


SDT-ConfigCommonSIB-r17 ::=        SEQUENCE {
    sdt-RSRP-Threshold-r17                                          RSRP-Range
OPTIONAL, -- Need R
    sdt-LogicalChannelSR-DelayTimer-r17  ENUMERATED { sf20, sf40, sf64, sf128,
sf512, sf1024, sf2560, spare1}  OPTIONAL, -- Need R
    sdt-DataVolumeThreshold-r17          ENUMERATED {byte32, byte100, byte200,
byte400, byte600, byte800, byte1000, byte2000, byte4000,
                                byte8000,    byte9000,    byte10000,    byte12000,
byte24000, byte48000, byte96000},
    t319a-r17                    ENUMERATED { ms100, ms200, ms300, ms400, ms600,
ms1000, ms2000,
                                ms3000,  ms4000,  spare7,  spare6,  spare5,  spare4,
spare3, spare2, spare1}
}


RedCap-ConfigCommonSIB-r17 ::= SEQUENCE {
    halfDuplexRedCapAllowed-r17                        ENUMERATED        {true}
OPTIONAL,  -- Need R
    cellBarredRedCap-r17        SEQUENCE {
        cellBarredRedCap1Rx-r17      ENUMERATED {barred, notBarred},
        cellBarredRedCap2Rx-r17      ENUMERATED {barred, notBarred}
    }
NES-ConfigCommonSIB ::= SEQUENCE {
    cellBarredNES    SEQUENCE {
        cellBarredNES-Mode1      ENUMERATED {barred, notBarred},
    cellBarredNES-Mode2      ENUMERATED {barred, notBarred},
    cellBarredNES-Mode3      ENUMERATED {barred, notBarred}
    } OPTIONAL, -- Need R
                                OPTIONAL,  -- Need R
```

...

}

FeaturePriority-r17 ::= INTEGER (0..7)

-- TAG-SIB1-STOP

-- ASN1STOP

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one..." or by using "consisting".

In this description, the wording 'connect', 'couple' and 'communication' and their derivatives mean operationally connected/coupled/in communication. It should be appreciated that any number or combination of intervening components can exist (including no intervening components), i.e., so as to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning.

The presence of a feature (or combination of features) in a claim is a reference to that feature or (combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance it should be understood that the Applicant may seek protection via the claims in respect of any patentable feature or combination of features hereinbefore referred to and/or shown in the drawings whether or not emphasis has been placed thereon.

## Claims

1.  An apparatus comprising:

    at least one processor; and
    at least one memory storing instructions that, when executed by the at least one processor, cause the apparatus at least to perform:

    determining to perform a connection request;
    performing an evaluation whether to initiate an access procedure with a network node wherein the evaluation comprises using at least one network energy saving mode parameter in an evaluation criterion; and
    initiating the access procedure with a network node based on whether the evaluation criterion is satisfied.

2.  The apparatus as claimed in claim 1 wherein the evaluation comprises determining at least a first value using the at least one network energy saving mode parameter and comparing the determined value to a random number.

3.  The apparatus as claimed in any of claims 1 to 2 wherein if the evaluation criterion is not satisfied the apparatus is caused to perform starting a barring timer wherein the duration of the barring timer is determined by at least one of a network energy saving mode parameter and an evaluation criterion.

4.  The apparatus as claimed in claim 3 wherein the apparatus is barred from performing an access procedure with the network node for the duration of the timer.

5.  The apparatus as claimed in any preceding claim wherein the at least one network energy saving mode parameter and the evaluation criterion are received from the network node.

6.  The apparatus as claimed in any preceding claim wherein the at least one network energy saving mode parameter comprises at least one of:

    a network energy saving barring factor;
    a network energy saving barring time; or

    an indication of an energy saving mode of the network node.

7.  The apparatus as claimed in any preceding claim, caused to perform:

    receiving an update for the at least one network energy saving mode parameter from the network node;
    updating or replacing the at least one network energy saving mode parameter based on the update; and
    performing the evaluation whether to initiate an access procedure with a network node wherein the evaluation comprises using at least one network energy saving mode parameter in an evaluation criterion.

8.  The apparatus of any preceding claim, wherein the at least one evaluation criterion comprises a mathematical operation based on the at least one network energy saving mode parameter.

9.  The apparatus as claimed in any preceding claim, wherein the at least one network energy saving mode parameter comprises at least one of:

different parameters for different energy saving modes of the network node;

an access category;

an access identity.

10. The apparatus of any preceding claim, wherein the at least one network energy saving mode parameter is at least one of:

associated with a specific type of the apparatus;

received as additional information to unified access control parameters.

11. The apparatus of any preceding claim, wherein the apparatus comprises or is comprised in one of:

- a user equipment;
- an energy harvesting device;
- a reduced capability device;
- an internet of things device; or
- an ambient internet of things device.

12. A method comprising:
determining to perform a connection request;

performing an evaluation whether to initiate an access procedure with a network node wherein the evaluation comprises using at least one network energy saving mode parameter in an evaluation criterion; and

initiating the access procedure with a network node based on whether the evaluation criterion is satisfied.

13. The method as claimed in claim 12 wherein the evaluation comprises determining at least a first value using the at least one network energy saving mode parameter and comparing the determined value to a random number.

14. The method as claimed in any of claims 12 to 13 wherein if the evaluation criterion is not satisfied the apparatus is caused to perform starting a barring timer wherein the duration of the barring timer is determined by at least one of a network energy saving mode parameter and an evaluation criterion.

15. A computer program comprising instructions which, when executed by an apparatus, cause the apparatus to perform at least:
determining to perform a connection request;

performing an evaluation whether to initiate an access procedure with a network node wherein the evaluation comprises using at least one network energy saving mode parameter in an evaluation criterion; and

initiating the access procedure with a network node based on whether the evaluation criterion is satisfied.

FIG. 1

EP 4 572 406 A1

FIG.2

Start ⌐300

Generate random number ⌐302

Check Evaluation criterion ⌐304

Y → Access attempt is permitted ⌐306

N

Generate second random number ⌐308

Determine barring time ⌐310

FIG.3

FIG.4

FIG.5

FIG.6

700

Processor — 702

Memory ▢ — 706

704

708

▢ — 706

FIG. 7

| | Europäisches Patentamt European Patent Office Office européen des brevets | **EUROPEAN SEARCH REPORT** | **Application Number** EP 24 21 6559 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARCIN AUGUSTYNIAK ET AL: "Running 38.331 CR - Introduction of Network energy savings for NR", 3GPP DRAFT; R2-2310002; TYPE DRAFTCR; NETW_ENERGY_NR-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Xiamen, CN; 20231009 - 20231013 29 September 2023 (2023-09-29), XP052529001, Retrieved from the Internet: URL:https://www.3gpp.org/ftp/TSG_RAN/WG2_R L2/TSGR2_123bis/Docs/R2-2310002.zip R2-2310002 38331-h50 NES CR.docx [retrieved on 2023-09-29] | 1,5-7, 10-12,15 | INV. H04W48/02 ADD. H04W48/12 H04W52/02 H04W4/70 |
| Y | * paragraph 4.2.1 * * paragraph 5.2.2.4.1 * * paragraph 5.2.2.4.2 * * paragraph 5.3.3 * * Figure 4.2.1-1 * * page 346 - page 347 * * page 389 - page 395 * * paragraph 5.3.14.5 *<br>----- <br>-/-- | 2-4,8,9, 13,14 | TECHNICAL FIELDS SEARCHED (IPC) H04W |

The present search report has been drawn up for all claims

| Place of search | Date of completion of the search | Examiner |
|---|---|---|
| Munich | 9 April 2025 | Ruscitto, Alfredo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 4

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MARCIN AUGUSTYNIAK ET AL: "Discussion on cell selection/reselection for NES", 3GPP DRAFT; R2-2300231; TYPE DISCUSSION; NETW_ENERGY_NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Athens, GR; 20230227 - 20230303 17 February 2023 (2023-02-17), XP052244881, Retrieved from the Internet: URL:https://www.3gpp.org/ftp/TSG_RAN/WG2_RL2/TSGR2_121/Docs/R2-2300231.zip R2-2300231 Discussion on cell selection reselection for NES.docx [retrieved on 2023-02-17] * paragraph 2 * ----- -/-- | 2-4,8,9, 13,14 | |

TECHNICAL FIELDS
SEARCHED       (IPC)

The present search report has been drawn up for all claims

| Place of search | Date of completion of the search | Examiner |
|---|---|---|
| Munich | 9 April 2025 | Ruscitto, Alfredo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

  .......................................................................................................................
& : member of the same patent family, corresponding
document

EPO FORM 1503 03.82 (P04C01)

Europäisches
Patentamt

European
Patent Office

Office européen
des brevets

## EUROPEAN SEARCH REPORT

**Application Number**

EP 24 21 6559

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JARKKO KOSKELA ET AL: "Reselection and Paging handling for NES", 3GPP DRAFT; R2-2306361; TYPE DISCUSSION; FS_NETW_ENERGY_NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. 3GPP RAN 2, no. Incheon, KR; 20230522 - 20230526 12 May 2023 (2023-05-12), XP052315574, Retrieved from the Internet: URL:https://www.3gpp.org/ftp/TSG_RAN/WG2_RL2/TSGR2_122/Docs/R2-2306361.zip R2-2306361 Cell reselection and cell selection for NES.docx [retrieved on 2023-05-12] * paragraph 2.1 * ----- | 1-15 | |
| Y | FRAUNHOFER IIS ET AL: "Alignment of UE and Network Energy Saving", 3GPP DRAFT; R2-2207960, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Online; 20220817 - 20220829 10 August 2022 (2022-08-10), XP052261275, Retrieved from the Internet: URL:https://ftp.3gpp.org/tsg_ran/WG2_RL2/TSGR2_119-e/Docs/R2-2207960.zip R2-2207960_Alignment_of_UE_and_network_energy_saving.docx [retrieved on 2022-08-10] * paragraph 4 * ----- -/-- | 9 | **TECHNICAL FIELDS SEARCHED (IPC)** |

The present search report has been drawn up for all claims

| Place of search | Date of completion of the search | Examiner |
|---|---|---|
| Munich | 9 April 2025 | Ruscitto, Alfredo |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
........................................................................
& : member of the same patent family, corresponding
   document

EPO FORM 1503 03.82 (P04C01)

page 3 of 4

| | Europäisches Patentamt<br>European Patent Office<br>Office européen des brevets | **EUROPEAN SEARCH REPORT** | **Application Number**<br>EP 24 21 6559 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | WO 2024/065478 A1 (NOKIA SHANGHAI BELL CO LTD [CN] ET AL.) 4 April 2024 (2024-04-04)<br>* paragraph [0032] - paragraph [0085] *<br>* figures 1,2 *<br>- - - - - | 1,12,15 | |
| | | | **TECHNICAL FIELDS SEARCHED (IPC)** |

The present search report has been drawn up for all claims

| Place of search | Date of completion of the search | Examiner |
|---|---|---|
| Munich | 9 April 2025 | Ruscitto, Alfredo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 21 6559

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2025

| Patent document cited in search report | Publication date | Patent family member(s) | | Publication date |
|---|---|---|---|---|
| WO 2024065478 A1 | 04-04-2024 | AU | 2022479729 A1 | 27-03-2025 |
| | | WO | 2024065478 A1 | 04-04-2024 |

EPO FORM P0459

For more details about this annex : see Official Journal of the European Patent Office, No. 12/82